# EUROPÄISCHE PATENTSCHRIFT

(11) **EP 3 441 224 B1**
(45) Veröffentlichungstag und Bekanntmachung des Hinweises auf die Patenterteilung: **14.04.2021**
(21) Anmeldenummer: 18187485.0
(22) Anmeldetag: 06.08.2018
(51) Int. Cl.: B41F 13/012, F16H 55/18

(54) **ZAHNRADANORDNUNG UND SENSORVORRICHTUNG**
TOOTHED WHEEL ARRANGEMENT AND SENSOR DEVICE
SYSTÈME DE ROUE DENTÉE ET DISPOSITIF CAPTEUR

(30) Priorität: 11.08.2017 DE 102017118373
(43) Veröffentlichungstag der Anmeldung: 13.02.2019
(73) Patentinhaber: Valeo Schalter und Sensoren GmbH, 74321 Bietigheim-Bissingen (DE)
(72) Erfinder: Koerner, Frank, 74321 Bietigheim-Bissingen (DE); Schmidt, Dirk, 74321 Bietigheim-Bissingen (DE); Lipfert, Rainer, 74321 Bietigheim-Bissingen (DE); Tandjeu-Tchuissi, Landry, 74321 Bietigheim-Bissingen (DE); Hadobas-Roessel, Katalin, 74321 Bietigheim-Bissingen (DE)
(74) Vertreter: Pothmann, Karsten

(56) Entgegenhaltungen:
- EP-A1- 0 849 078
- DE-A1-102004 008 171
- DE-A1-102009 031 176
- JP-A- H0 989 084
- US-A- 2 966 806
- US-A- 3 035 454
- US-B1- 7 752 937

## Beschreibung

Die vorliegende Erfindung betrifft eine Zahnradanordnung zur Erfassung und/oder Übertragung eines Drehwinkels einer drehbaren Welle, vorzugsweise für eine Sensorvorrichtung zur Erfassung eines Drehwinkels einer drehbaren Welle, insbesondere für eine Lenkwinkelsensorvorrichtung zur Erfassung eines Drehwinkels einer Lenkwelle eines Kraftfahrzeugs, wobei die Zahnradanordnung wenigstens einen drehsynchron mit der Welle verbindbaren und um eine erste Drehachse drehbaren Hauptrotor mit einer Verzahnung und wenigstens einen mechanisch mit einer konstanten und gleichförmigen ersten Übersetzung mit dem Hauptrotor gekoppelten und um eine, insbesondere zur ersten Drehachse parallele, zweite Drehachse drehbaren Nebenrotor mit einer Verzahnung aufweist, wobei die Verzahnung des Hauptrotors mit der Verzahnung des Nebenrotors kämmt.

Ferner betrifft die Erfindung eine Sensorvorrichtung zur Erfassung eines Drehwinkels einer drehbaren Welle, insbesondere eine Lenkwinkelsensorvorrichtung zur Erfassung eines Drehwinkels einer Lenkwelle eines Kraftfahrzeugs mit einer vorgenannten Zahnradanordnung und einer Sensoreinrichtung zur Erfassung des Drehwinkels des wenigstens einen Nebenrotors.

Derartige Zahnradanordnungen, insbesondere für Lenkwinkelsensoreinrichtungen, sind aus dem Stand der Technik grundsätzlich bekannt. Insbesondere sind Zahnradanordnungen bekannt, beispielsweise aus der DE 195 06 938 A1 oder der DE 10 2009 031 176 A1, welche zur Erfassung eines absoluten Drehwinkels einer Welle zusätzlich einen mechanisch mit einer von der ersten Übersetzung verschiedenen, konstanten und gleichförmigen zweiten Übersetzung mit dem Hauptrotor gekoppelten zweiten Nebenrotor aufweisen sowie eine dem ersten Nebenrotor zugeordnete erste Sensoreinrichtung zur Erzeugung eines von einem Drehwinkel des ersten Nebenrotors abhängigen ersten Sensorsignals und eine dem zweiten Nebenrotor zugeordnete zweite Sensoreinrichtung zur Erzeugung eines von dem von einem Drehwinkel des zweiten Nebenrotors abhängigen zweiten Sensorsignals. Üblicherweise ist noch eine Auswerteeinrichtung zur Ermittlung des absoluten Drehwinkels des Hauptrotors aus den mittels der Sensoreinrichtungen erfassten Sensorsignalen vorhanden.

Die DE 10 2004 008 171 A1 offenbart eine Zahnradanordnung, bei der ein erstes Zahnrad eines Nebenrotors mit einer Drehachse drehfest gekoppelt ist. Ein zweites Zahnrad des Nebenrotors der D1 ist dabei mit der Drehachse über ein Federelement gekoppelt.

Die JP H09 89084 A offenbart eine Zahnradanordnung mit zwei Zahnrädern, welche über eine Ringfeder, eine gebogene Schenkelfeder oder einer Schraubenfeder miteinander verspannt werden.

Die US 7 752 937 B1 offenbart eine Zahnradanordnung mit zwei Zahnrädern, welche über drei fingerförmige Federelemente, welche in Umfangsrichtung gleichmäßig an einem Zahnrad angeordnet sind und in eine zentrale Aufnahme eingreifen, miteinander verspannt werden.

Die US 2 966 806 A offenbart ein Zahnrad mit zwei Federelementen bestehend aus zwei gebogenen Federarmen, welche sich jeweils von einer zentralen Aufnahme des Zahnrades erstrecken.

Die EP 0 849 078 A offenbart eine Vorrichtung zur Vermeidung von Spiel zwischen einem ersten Zahnrad und einem zweiten Zahnrad umfassend ein beilaufendes Zahnrad, das neben dem ersten Zahnrad drehbar gelagert ist und sich um die gleiche Drehachse wie das erste Zahnrad dreht, wobei die Zähne des beilaufenden Zahnrads mit den Zähnen des zweiten Zahnrads kämmen. Die Vorrichtung umfasst ferner eine Blattfederanordnung, die sich bezüglich der Drehachse des ersten Zahnrads im Wesentlichen radial erstreckt. Die Blattfederanordnung wird aus ihrer Nullposition ausgelenkt und kontaktiert ein Stützelement, wobei das Stützelement mit einer Kraft beaufschlagt wird, die das beilaufende Zahnrad und das erste Zahnrad vorspannt.

Die US 3 035 454 A offenbart eine Zahnradanordnung, bei der ein erstes Zahnrad eines Nebenrotors mit einer Drehachse drehfest gekoppelt ist. Ein zweites Zahnrad des Nebenrotors der D1 ist dabei mit der Drehachse über ein Federelement gekoppelt.

Zugehörige Verfahren zur Erfassung des absoluten Drehwinkels der Welle mit einer solchen Lenkwinkelsensoreinrichtung sind ebenfalls grundsätzlich bekannt, beispielsweise aus der erstgenannten DE 195 06 938 A1 oder der DE 101 10 785 A1, auf die insbesondere für nähere Ausführungen in Bezug auf die Erfassung des absoluten Drehwinkels der Welle, insbesondere in Abhängigkeit von zwei Sensorsignalen, verwiesen wird.

Zur Übertragung der Drehbewegung zwischen Hauptrotor und Nebenrotor werden oftmals Zahnradgetriebe eingesetzt, d.h. Hauptrotor und Nebenrotor(en) sind oftmals Zahnräder. Durch Elastizitäten im Zahnradgetriebe und/oder infolge von Temperaturschwankungen kann Spiel zwischen den einzelnen Zahnrädern entstehen bzw. sich ein definiertes Spiel in unerwünschter Weise ändern. Dadurch kann es einerseits, insbesondere bei einer unerwünschten Verringerung des Spiels, zu einer "Verspannung" der einzelnen Zahnräder kommen und infolgedessen zu einem übermäßigen Verschleiß der Zahnradanordnung. Andererseits können, insbesondere bei einer unerwünschten Vergrößerung des Spiels, unerwünschte Klappergeräusche entstehen. Ferner kann eine Hysterese entstehen bzw. eine bestehende Hysterese vergrößert werden. Dies kann sich nachteilig auf die Genauigkeit des Lenksäulenmoduls auswirken.

Zur Verringerung der Geräuschentwicklung bei einem Lenksäulenmodul, welches ein stationäres Gehäuse, eine im Gehäuse drehbar gelagerte und mit einer Lenkspindel drehfest verbundene Hülse mit einer umlaufenden Verzahnung sowie ein Zahnrad, das mit der Verzahnung der Hülse kämmt, aufweist, schlägt die DE 10 2004 021 405 A1 vor, das Zahnrad durch wenigstens zwei übereinander liegende Zahnradelemente zu bilden, welche mithilfe einer Schenkelfeder oder einer Ω-förmigen Feder gegeneinander verspannt sind oder gegeneinander verdreht sind und jeweils mit der Verzahnung der Hülse kämmen.

Vor diesem Hintergrund ist es eine Aufgabe der Erfindung, eine alternative Zahnradanordnung sowie eine alternative Sensorvorrichtung bereitzustellen, vorzugsweise eine verbesserte Zahnradanordnung und eine verbesserte Sensorvorrichtung, insbesondere eine Zahnradanordnung, welche eine nahezu, insbesondere vollständig hysteresefreie Übertragung eines Drehwinkels einer Welle ermöglicht und welche einen konstruktiv besonders einfachen Aufbau aufweist.

Diese Aufgabe wird durch eine erfindungsgemäße Zahnradanordnung gemäß Patentanspruch 1 sowie durch eine Sensorvorrichtung gemäß Patentanspruch 6 gelöst. Vorteilhafte Ausführungen der Erfindung sind Gegenstand der abhängigen Patentansprüche, der Beschreibung und der Figuren und werden im Folgenden näher erläutert.

Eine Zahnradanordnung zur Erfassung und/oder Übertragung eines Drehwinkels einer drehbaren Welle gemäß der vorliegenden Erfindung, umfasst die Merkmale des Anspruchs 1.

Vorzugsweise ist der Hauptrotor ein Zahnrad, insbesondere ein koaxial zur Welle anordbares und drehfest mit der Welle verbindbares Zahnrad, wobei der Hauptrotor in einem funktionsgemäßen Verwendungszustand einer erfindungsgemäßen Zahnradanordnung, insbesondere in einem funktionsgemäßen Verwendungszustand einer erfindungsgemäßen Sensorvorrichtung, koaxial zur Welle angeordnet ist und drehfest mit dieser verbunden ist.

Ein Federelement im Sinne der vorliegenden Erfindung ist ein als Feder wirkendes und/oder ausgebildetes Bauteil. "Gekoppelt" bedeutet im Sinne der vorliegenden Erfindung "wirkverbunden". Zwei Bauteile, die mittels eines Federelements gekoppelt sind, sind im Sinne der vorliegenden Erfindung somit mittels einer Feder wirkverbunden, insbesondere derart, dass eine Relativbewegung der beiden Bauteile zumindest teilweise entgegen einer Rückstellkraft der Feder bewirkbar ist.

Unter einer Biegefeder im Sinne der vorliegenden Erfindung wird eine Feder verstanden, welche dazu ausgelegt ist, wenigstens teilweise, insbesondere größtenteils, vorzugsweise nur, auf Biegung belastet zu werden.

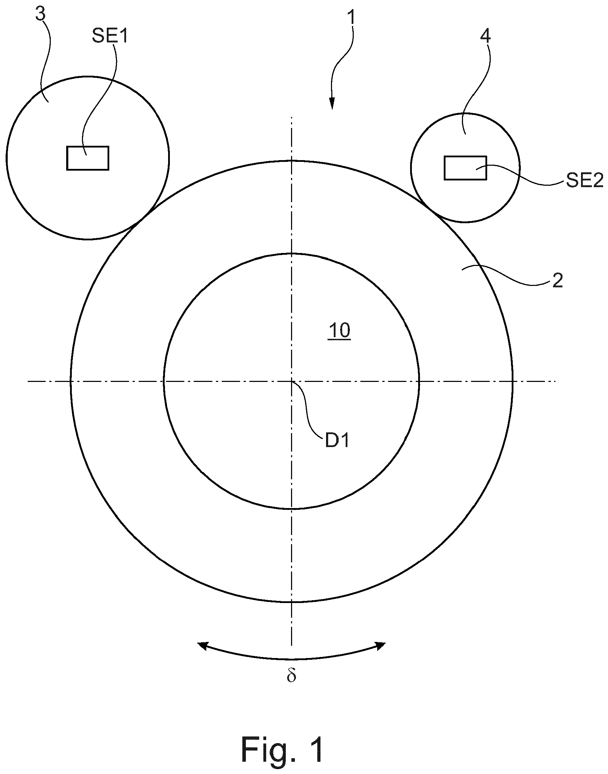

Unter einem Biegewinkel einer in einem spannungsfreien Zustand geraden Biegefeder wird im Sinne der vorliegenden Erfindung der äußere Winkel α zwischen den Tangenten einer in den Endpunkten neutralen Faser der Biegefeder verstanden, wie in folgender Abbildung 1 dargestellt.

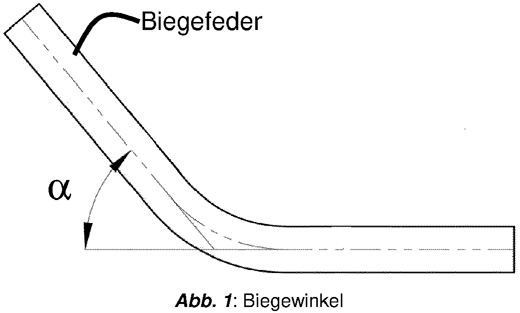

Mit einer geraden Biegefeder mit einem Biegewinkel von null Grad, d.h. von 0°, kann ein konstruktiv besonders einfacher Aufbau einer Zahnradanordnung mit einem Nebenrotor, der wenigstens zwei konzentrisch zur zweiten Drehachse und in axialer Richtung der zweiten Drehachse parallel zueinander angeordnete, insbesondere in axialer Richtung benachbart und/oder aneinander angrenzend angeordnete, Zahnräder aufweist, die mittels eines Federelementes miteinander gekoppelt sind, erreicht werden. Ferner ist ein Zusammenbau der Zahnradanordnung auf einfache Art und Weise möglich. Insbesondere kann eine kostengünstig herstellbare Zahnradanordnung bereitgestellt werden.

Durch diese Anordnung kann, insbesondere bei einem geeignet gewählten, definierten Verdrehwinkel, eine spielfreie Übertragung einer Drehbewegung des Hauptrotors auf den Nebenrotor erreicht werden, insbesondere bei gleichzeitiger Vermeidung bzw. Reduzierung einer Gefahr einer Verspannung der Zahnradanordnung. Somit kann eine Zahnradanordnung bereitgestellt werden, welche eine spielfreie Übertragung der Drehbewegung des Hauptrotors auf den Nebenrotor ermöglicht, bei der jedoch, insbesondere gleichzeitig, die Gefahr eines möglicherweise auftretenden erhöhten Verschleißes infolge von auftretenden Verspannungen reduziert bzw. vermieden ist.

Vorzugsweise ermöglicht die Zahnradanordnung eine relative Verdrehung der beiden Zahnräder um einen relativen Verdrehwinkel von wenigstens 2, 3 oder 4 Grad und/oder von höchstens 3, 4 oder 5 Grad, wobei im Sinne der Erfindung der relative Verdrehwinkel derjenige Winkel in Umfangsrichtung ist, um welchen eines der Zahnräder des Nebenrotors relativ gegenüber dem anderen Zahnrad in Umfangsrichtung verdreht werden kann.

Vorzugsweise weisen die wenigstens zwei Zahnräder des Nebenrotors eine gleiche Zähnezahl und/oder eine gleiche Verzahnungsgeometrie und/oder im Bereich der Verzahnung zumindest teilweise, vorzugsweise vollständig, kongruente, d.h. deckungsgleiche, Stirnquerschnitte auf.

Vorzugsweise weisen sämtliche Verzahnungen, d.h. die Verzahnung des Hauptrotors und des Nebenrotors, insbesondere jeweils die Verzahnungen der wenigstens zwei Zahnräder des Nebenrotors eine Evolventenverzahnung auf. Die Verzahnungen können aber auch als Wildhaber-Novikov-Verzahnung oder als Zykloidenverzahnung ausgebildet sein, wobei sich die Auswahl der Verzahnung insbesondere nach den jeweiligen Anforderungen an die Verzahnung im Einzelfall richtet. Für die meisten Anwendungsfälle eignet sich insbesondere die Evolventenverzahnung.

Vorzugsweise ist die Zahnradanordnung derart ausgebildet, dass die Zähne der wenigstens zwei Zahnräder des Nebenrotors bei einem relativen Verdrehwinkel von null Grad (0°) kongruent, d.h. deckungsgleich, übereinanderliegen.

Dadurch kann, insbesondere bei einer symmetrisch ausgestalteten und punktsymmetrisch zur zweiten Drehachse angeordneten Biegefeder auf einfache Art und Weise eine symmetrische Verteilung der auftretenden Federkräfte, insbesondere der auftretenden Biegekräfte sowie eine symmetrische Biegung der Biegefeder erreicht werden, was vorteilhaft hinsichtlich der Festigkeit der Zahnräder des Nebenrotors ist.

Vorzugsweise weist die Biegefeder wenigstens ein Federblatt auf oder ist eine Blattfeder, wobei die Biegefeder insbesondere ein zumindest teilweise rechteckiges Federblatt und/oder ein Federblatt mit einem zumindest teilweise rechteckigen Querschnitt aufweist. Die Biegefeder kann auch mehrere Federblätter, insbesondere ein Federblattpaket mit mehreren, übereinander gestapelten Federblättern, aufweisen. Ein oder mehrere Federblätter können auch eine von einer rechteckigen Form und/oder einem rechteckigen Querschnitt abweichenden Querschnitt aufweisen. Ein oder mehrere Federblätter können insbesondere trapezförmig oder tonnenförmig ausgebildet sein und/oder einen trapezförmigen oder tonnenförmigen Querschnitt aufweisen.

Weist die Biegefeder wenigstens ein Federblatt auf oder ist eine Blattfeder, ist wenigstens ein Federblatt, insbesondere die Blattfeder, vorzugsweise derart angeordnet, dass sich in einem geraden Zustand der Biegefeder zumindest teilweise, vorzugsweise vollständig, ihre Breite in axialer Richtung parallel zur zweiten Drehachse erstreckt und ihre Dicke in radialer Richtung zur zweiten Drehachse.

Alternativ oder zusätzlich kann die Biegefeder auch wenigstens einen Federdraht aufweisen oder durch einen Federdraht gebildet sein.

Mit einer derartigen Biegefeder, insbesondere mit einer als Blattfeder oder als Federdraht ausgebildeten Biegefeder, kann ein konstruktiv einfacher Aufbau einer erfindungsgemäßen Zahnradanordnung erreicht werden.

In einer weiteren vorteilhaften Ausgestaltung einer erfindungsgemäßen Zahnradanordnung ist die Biegefeder derart ausgebildet und angeordnet, dass durch eine Verdrehung der beiden Zahnräder des Nebenrotors relativ zueinander eine Biegung der Biegefeder mit einem in einer Normalenebene zur zweiten Drehachse liegenden Biegeradius bewirkbar ist. Der Biegeradius ist im Sinne der vorliegenden Erfindung dabei der Radius, der die Krümmung der Biegung definiert.

Insbesondere ist die Biegefeder derart ausgebildet und angeordnet, dass eine Verdrehung der beiden Zahnräder des Nebenrotors relativ zueinander eine Veränderung einer Biegung der Biegefeder bewirkt.

Vorzugsweise ist wenigstens ein erstes der Zahnräder des Nebenrotors drehfest mit einer Nebenrotorwelle verbunden oder drehbar gegenüber einer feststehenden Nebenrotorachse gelagert, während das andere, wenigstens zweite Zahnrad insbesondere drehbar am ersten Zahnrad gelagert ist.

Es können aber auch beide Zahnräder jeweils separat voneinander entweder drehfest mit einer Nebenrotorwelle verbunden sein oder drehbar gegenüber einer feststehenden Nebenrotorachse gelagert sein, wobei auch eine unterschiedliche Lagerung möglich ist.

In einer weiteren vorteilhaften Ausgestaltung einer erfindungsgemäßen Zahnradanordnung weist der erste hülsenförmige Abschnitt wenigstens eines Zahnrades des Nebenrotors, vorzugsweise jeweils der erste hülsenförmige Abschnitt von den wenigstens zwei Zahnrädern des Nebenrotors, wenigstens eine Ausnehmung in Umfangsrichtung auf, vorzugsweise zwei in radialer Richtung gegenüberliegende Ausnehmungen, insbesondere wenigstens einen Schlitz und/oder eine Nut, durch welchen sich die Biegefeder hindurcherstreckt.

Dabei erstreckt sich die Biegefeder vorzugsweise in radialer Richtung durch die Ausnehmung(en) hindurch, insbesondere mit Spiel, welches vorzugsweise derart bemessen ist, dass ein definierter, maximal möglicher Verdrehwinkel möglich ist, dabei jedoch, insbesondere stets, d.h. insbesondere in jedem Betriebspunkt, eine ausreichende Feder(spann)kraft aufbaubar ist, um eine spielfreie Verzahnung des Nebenrotors mit dem Hauptrotor zu erreichen.

Dabei befindet sich der zweite hülsenförmige Abschnitt vorzugsweise radial weiter außen als der erste hülsenförmige Abschnitt des zugehörigen Zahnrads.

In einer weiteren vorteilhaften Ausgestaltung einer erfindungsgemäßen Zahnradanordnung ist die Biegefeder an wenigstens einem der wenigstens zwei Zahnräder, insbesondere am ersten Zahnrad, festgelegt, vorzugsweise im Bereich ihrer Enden oder an ihren Enden, insbesondere am zweiten hülsenförmigen Abschnitt des Zahnrads.

Vorzugsweise ist die Biegefeder durch Klemmen am zugehörigen Zahnrad festgelegt und/oder durch Umspritzen mit einem Kunststoff, aus welchem insbesondere das zugehörige Zahnrad hergestellt ist, mit diesem Zahnrad verbunden.

Bei einer Lenkwinkelsensorvorrichtung für ein Fahrzeug, ist die Biegefeder, bezogen auf einen funktionsgemäßen Einbauzustand der Lenkwinkelsensorvorrichtung im Fahrzeug, in welchem sich die zweite Drehachse insbesondere parallel zu einer Drehachse der Lenkwelle und/oder einer Lenksäule erstreckt, vorzugsweise am unteren Zahnrad festgelegt, insbesondere durch Klemmen.

In einer weiteren vorteilhaften Ausgestaltung einer erfindungsgemäßen Zahnradanordnung ist die Biegefeder am anderen der wenigstens zwei Zahnräder des Nebenrotors, insbesondere an dem, an dem sie nicht festgelegt ist, vorzugsweise am zweiten Zahnrad, in einem Schlitz und/oder einer Nut geführt und/oder geklemmt, wobei sich der Schlitz und/oder die Nut vorzugsweise zumindest teilweise entlang eines Durchmesser des zugehörigen Zahnrads erstreckt, insbesondere nur innerhalb des ersten hülsenförmigen Abschnitts. D.h. vorzugsweise ragt der Schlitz und/oder die Nut zur Aufnahme und/oder Führung und/oder Klemmung der Biegefeder am zweiten Zahnrad in radialer Richtung nicht über den ersten hülsenförmigen Abschnitt hinaus.

Bei einer Lenkwinkelsensorvorrichtung für ein Fahrzeug, ist die Biegefeder vorzugsweise, bezogen auf einen funktionsgemäßen Einbauzustand der Lenkwinkelsensorvorrichtung im Fahrzeug am oberen Zahnrad in einem Schlitz und/oder einer Nut geführt und/oder geklemmt.

Ein U-förmiger Schlitz- und/oder Nutquerschnitt hat sich dabei als vorteilhaft herausgestellt. Denkbar sind aber auch davon abweichende Geometrien.

Insbesondere zum Klemmen kann die Nut Klemmelemente aufweisen, welche sich vorzugsweise seitlich nach innen in die Nut hinein erstrecken können, insbesondere parallel zu einer Radialebene des Zahnrads.

Eine erfindungsgemäße Sensorvorrichtung zur Erfassung eines Drehwinkels einer drehbaren Welle, insbesondere eine erfindungsgemäße Lenkwinkelsensorvorrichtung zur Erfassung eines Drehwinkels einer Lenkwelle eines Kraftfahrzeugs, weist eine Zahnradanordnung mit wenigstens einem drehsynchron mit der Welle verbindbaren und um eine erste Drehachse drehbaren Hauptrotor mit einer Verzahnung sowie mit wenigstens einen mechanisch mit einer konstanten und gleichförmigen ersten Übersetzung mit dem Hauptrotor gekoppelten und um eine, insbesondere zur ersten Drehachse parallele, zweite Drehachse drehbaren Nebenrotor mit einer Verzahnung auf, wobei die Verzahnung des Hauptrotors mit der Verzahnung des Nebenrotors kämmt. Ferner weist eine erfindungsgemäße Sensorvorrichtung eine Sensoreinrichtung zur Erfassung des Drehwinkels des wenigstens einen Nebenrotors auf.

Die Zahnradanordnung einer erfindungsgemäßen Sensorvorrichtung ist dabei eine gemäß der vorliegenden Erfindung ausgebildete Zahnradanordnung.

Eine erfindungsgemäße Sensorvorrichtung ermöglicht eine spielfreie Übertragung des Drehwinkels des Hauptrotors auf wenigstens einen Nebenrotor über einen großen Betriebsbereich und somit eine Verbesserung der Genauigkeit der Sensorvorrichtung.

Zusätzlich kann eine erfindungsgemäße Sensorvorrichtung noch eine Auswerteinrichtung zur Erfassung des Drehwinkels der Welle wenigstens in Abhängigkeit von dem erfassten Drehwinkel des Nebenrotors aufweisen. Ferner können eine oder mehrere weitere Sensoreinrichtungen vorhanden sein.

In einer vorteilhaften Ausgestaltung einer erfindungsgemäßen Sensorvorrichtung weist die Sensoreinrichtung wenigstens eine Magnetfelderzeugungseinrichtung, insbesondere einen Permanentmagneten, und wenigstens einen Magnetsensor auf, wobei mittels der Magnetfelderzeugungseinrichtung eine Drehbewegung des Nebenrotors und damit eine Drehbewegung der Welle, zu dem Magnetsensor übertragbar ist und mittels des Magnetsensors ein Drehwinkel des zugehörigen Nebenrotors erfassbar ist.

Bevorzugt ist die Magnetfelderzeugungseinrichtung dabei drehfest am Nebenrotor befestigt, insbesondere an einem der Zahnräder des Nebenrotors, vorzugsweise am zweiten Zahnrad des Nebenrotors. Der Magnetsensor ist insbesondere gehäusefest angeordnet.

Vorzugsweise weist eine erfindungsgemäße Sensorvorrichtung einen mechanisch mit einer von der ersten Übersetzung verschiedenen, konstanten und gleichförmigen zweiten Übersetzung mit dem Hauptrotor gekoppelten weiteren, zweiten Nebenrotor auf sowie eine erste, dem ersten Nebenrotor zugeordnete Sensoreinrichtung zur Erfassung des Drehwinkels des ersten Nebenrotors und zur Erzeugung eines von einem Drehwinkel des ersten Nebenrotors abhängigen ersten Sensorsignals sowie eine weitere, dem weiteren, zweiten Nebenrotor zugeordnete zweite Sensoreinrichtung zur Erfassung eines Drehwinkels des zweiten Nebenrotors und zur Erzeugung eines von einem Drehwinkel des zweiten Nebenrotors abhängigen zweiten Sensorsignals.

Bevorzugt ist die Auswerteinrichtung dabei zur Ermittlung des Drehwinkels, insbesondere zur Ermittlung des absoluten Drehwinkels des Hauptrotors aus den Sensorsignalen der Sensoreinrichtungen ausgebildet.

Insbesondere ist der zweite Nebenrotor ebenfalls erfindungsgemäß ausgebildet und weist wenigstens zwei konzentrisch zu einer weiteren Drehachse und in axialer Richtung der weiteren Drehachse parallel zueinander angeordnete, insbesondere in axialer Richtung benachbart und/oder aneinander angrenzend angeordnete, Zahnräder auf, welche jeweils drehbar um die weitere Drehachse sind und jeweils mit der Verzahnung des Hauptrotors kämmen, wobei die wenigstens zwei Zahnräder des zweiten Nebenrotors um die weitere Drehachse relativ zueinander verdrehbar sind und mittels wenigstens eines weiteren Federelements miteinander gekoppelt sind, insbesondere mittels einer geraden Biegefeder, die in einem spannungsfreien Zustand einen Biegewinkel von null Grad (0°) aufweist.

Die Funktionsweise einer solchen Sensorvorrichtung, insbesondere einer als Lenkwinkelsensorvorrichtung ausgebildeten Sensorvorrichtung, ist aus dem Stand der Technik grundsätzlich bekannt und trifft auch auf eine erfindungsgemäße Sensorvorrichtung zu. Hinsichtlich weiterer Ausführungen zur Funktionsweise und bezüglich weiterer Details für eine funktionsfähige Ausgestaltung einer erfindungsgemäßen Sensorvorrichtung wird explizit insbesondere auf die DE 195 06 938 A1 sowie die DE 10 2009 031 176 A1 verwiesen.

Weitere Merkmale ergeben sich aus den Ansprüchen, den Figuren und der Figurenbeschreibung. Alle vorstehend in der Beschreibung genannten Merkmale und Merkmalskombinationen sowie die nachfolgenden in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, sofern sie technisch sinnvoll sind.

Die Erfindung wird im Folgenden anhand eines vorteilhaften Ausführungsbeispiels unter Bezugnahme auf die beigefügten Zeichnungen näher erläutert. Es zeigen schematisch:
- Fig. 1: ein Ausführungsbeispiel einer erfindungsgemäßen Lenkwinkelsensorvorrichtung mit einem Ausführungsbeispiel einer erfindungsgemäßen Zahnradanordnung mit einem Hauptrotor und einem ersten Nebenrotor und einem zweiten Nebenrotor in Draufsicht,
- Fig. 2: einen Ausschnitt der erfindungsgemäßen Lenkwinkelsensorvorrichtung aus Fig. 1 im Detail in Draufsicht,
- Fig. 3: den ersten Nebenrotor der erfindungsgemäßen Lenkwinkelsensorvorrichtung aus den Fig. 1 und 2 in Explosionsdarstellung,
- Fig. 4: ein erstes Zahnrad des ersten Nebenrotors aus Fig. 3 mit einer daran befestigten, erfindungsgemäß ausgebildeten Biegefeder in perspektivischer Darstellung,
- Fig. 5a: ein zweites Zahnrad des ersten Nebenrotors aus Fig. 3 in Ansicht von unten,
- Fig. 5b: das zweite Zahnrad aus Fig. 5a in Ansicht von oben, und
- Fig. 6: in perspektivischer Darstellung schematisch den ersten Nebenrotor aus den Fig. 1 bis 4 in einem spannungsfreien Zustand der Biegefeder.

Fig. 1 zeigt in schematischer Darstellung den prinzipiellen Aufbau eines Ausführungsbeispiels einer erfindungsgemäßen Lenkwinkelsensorvorrichtung 1 zur Erfassung und Ermittlung eines absoluten Lenkwinkels δ einer Lenkwelle 10 mit einem Ausführungsbeispiel einer erfindungsgemäßen Zahnradanordnung in Draufsicht.

Die erfindungsgemäße Lenkwinkelsensorvorrichtung 1 weist dabei einen drehfest und in Umfangsrichtung spielfrei mit der Lenkwelle 10 verbundenen Hauptrotor 2 sowie einen ersten Nebenrotor 3 und einen zweiten Nebenrotor 4 auf.

Der Hauptrotor 2 ist aufgrund seiner drehfesten, in Umfangsrichtung spielfreien Verbindung mit der Lenkwelle 10 dabei drehsynchron mit der Lenkwelle 10 verbunden, so dass eine Verdrehung der Lenkwelle 10 um eine erste Drehachse D1 um einen definierten, absoluten Drehwinkel δ eine Verdrehung des Hauptrotors 2 um den gleichen, definierten, absoluten Drehwinkel δ bewirkt.

Der erste Nebenrotor 3 und der zweite Nebenrotor 4 bilden dabei jeweils mit dem Hauptrotor 2 ein Zahnradgetriebe, wobei der Nebenrotor 3 mit dem Hauptrotor 2 mechanisch über eine Verzahnung mit einer konstanten und gleichförmigen ersten Übersetzung mit dem Hauptrotor 2 gekoppelt ist. Der zweite Nebenrotor 4 ist ebenfalls mechanisch über eine Verzahnung mit dem Hauptrotor 2 gekoppelt, jedoch mit einer von der ersten Übersetzung verschiedenen, konstanten und gleichförmigen zweiten Übersetzung. Dazu weist der zweite Nebenrotor 4 eine vom ersten Nebenrotor 3 abweichende Zähnezahl auf.

Zur Erzeugung eines von einem Drehwinkel des ersten Nebenrotors 3 abhängigen ersten Sensorsignals weist die erfindungsgemäße Lenkwinkelsensorvorrichtung 1 eine erste Sensoreinrichtung SE1 auf sowie eine zweite Sensoreinrichtung SE2 zur Erzeugung eines von einem Drehwinkel des zweiten Nebenrotors 4 abhängigen, zweiten Sensorsignals.

Des Weiteren weist die erfindungsgemäße Lenkwinkelsensorvorrichtung 1 eine hier nicht dargestellte Auswerteeinrichtung zur Ermittlung des absoluten Drehwinkels δ des Hauptrotors 2 bzw. der mit diesem drehsynchron verbundenen Lenkwelle 10 aus den Sensorsignalen der Sensoreinrichtungen SE1 und SE2 auf.

Die Sensoreinrichtungen SE1 und SE2 sind bei diesem Ausführungsbeispiel einer erfindungsgemäßen Lenkwinkelsensorvorrichtung 1 dabei als magnetische Sensoreinrichtungen SE1, SE2 ausgebildet, wobei die erste Sensoreinrichtung SE1 und die zweite Sensoreinrichtung SE2 jeweils dazu ausgebildet sind, den Drehwinkel des zugehörigen Nebenrotor 3 bzw. 4 jeweils wenigstens über eine volle Umdrehung zu erfassen, d.h. wenigstens über einen Drehwinkelbereich von 360°, so dass sich aus dem erfassten ersten Sensorsignal und/oder aus dem erfassten zweiten Sensorsignal der absolute Drehwinkel δ des Hauptrotors bzw. der Lenkwelle 10 bestimmen bzw. ermitteln lässt.

Die Auswerteeinrichtung der erfindungsgemäßen Lenkwinkelsensorvorrichtung 1 ist dabei dazu ausgebildet, den absoluten Drehwinkel δ des Hauptrotors 2 aus dem von der ersten Sensoreinrichtung SE1 erzeugten ersten Sensorsignal und/oder aus dem von der zweiten Sensoreinrichtung SE2 erzeugten zweiten Sensorsignal zu bestimmen, insbesondere nach dem Noniusprinzip, wie es etwa in der DE 195 06 938 A1 beschrieben ist, auf das an dieser Stelle zur Funktionsweise ausdrücklich verwiesen wird.

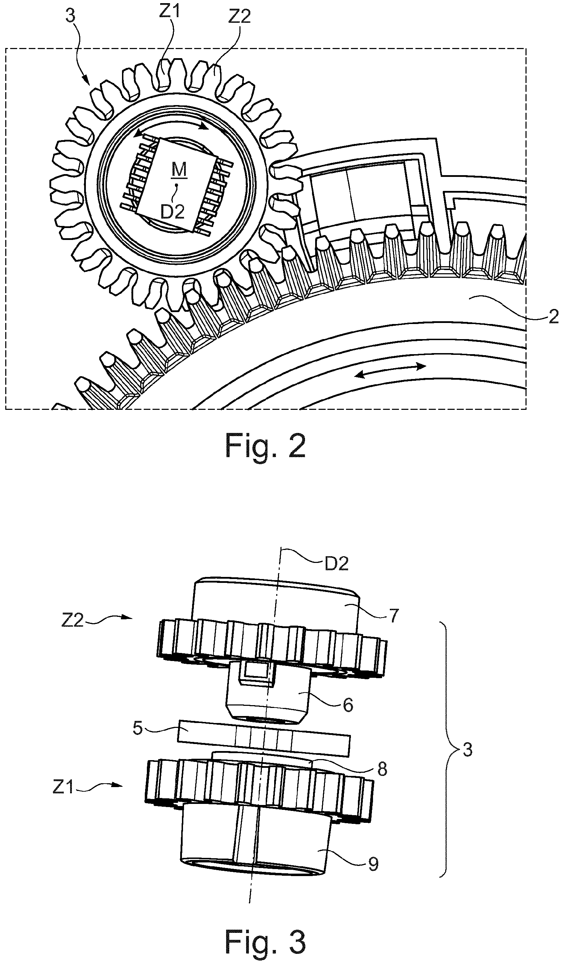

Fig. 2 zeigt einen Ausschnitt der erfindungsgemäßen Lenkwinkelsensorvorrichtung 1 im Bereich des ersten Nebenrotors 3 aus Fig. 1 im Detail in Draufsicht, wobei in dieser Darstellung besonders gut zu erkennen ist, dass der ersten Nebenrotor 3 über eine Verzahnung mit dem Hauptrotor 2 gekoppelt ist und mit diesem kämmt. Erfindungsgemäß weist der Nebenrotor 3 wenigstens zwei konzentrisch zu einer zweiten Drehachse D2 und in axialer Richtung der zweiten Drehachse D2 parallel zueinander angeordnete, insbesondere übereinander angeordnete, Zahnräder Z1 und Z2 auf, welche jeweils drehbar um die zweite Drehachse D2 sind und jeweils mit der Verzahnung des Hauptrotors 2 kämmen, wobei die wenigstens zwei Zahnräder Z1 und Z2 des Nebenrotors 3 um die zweite Drehachse D2 relativ zueinander verdrehbar bzw. verdreht sind und eine identisch ausgebildete Verzahnungen aufweisen, d.h. die gleiche Zähnezahl und die gleiche Verzahnungsgeometrie.

Zur Erfassung des Drehwinkels des ersten Nebenrotors 3 ist am zweiten Zahnrad Z2, bezogen auf die Darstellung in Fig. 2 am oberen Zahnrad Z2, ein Permanentmagnet M als Magnetfelderzeugungseinrichtung M befestigt, welcher zusammen mit einem hier nicht erkennbar dargestellten Magnetsensor, insbesondere einem Hall-Sensor, Teil der ersten Sensoreinrichtung SE1 ist, insbesondere zusammen mit dem Magnetsensor die erste Sensoreinrichtung SE1 bildet. Gattungsgemäße Sensoreinrichtungen sowie deren Funktionsweise und deren erforderliche Ausgestaltung zur Erfassung eines Drehwinkels sind aus dem Stand der Technik grundsätzlich bekannt, auf welchen diesbezüglich für nähere Informationen hierzu verwiesen wird.

Fig. 3 zeigt den ersten Nebenrotor 3 der erfindungsgemäßen Lenkwinkelsensorvorrichtung aus den Fig. 1 und 2 in Explosionsdarstellung mit dem erfindungsgemäß vorgesehenen, als gerade Biegefeder ausgebildeten Federelement 5, welches in einem spannungsfreien Zustand einen Biegewinkel α (vgl. Abb. 1) von null Grad (0°) aufweist, und über welches das erste Zahnrad Z1 und das zweite Zahnrad Z2 des ersten Nebenrotors 3 miteinander gekoppelt sind.

Bei diesem Ausführungsbeispiel einer erfindungsgemäßen Zahnradanordnung weist das zweite, in diesem Fall obere, Zahnrad Z2 einen sich in axialer Richtung parallel zur zweiten Drehachse D2 erstreckenden ersten hülsenförmigen Abschnitt 6 auf zur drehbaren Befestigung des Zahnrads Z2 an einer in den Figuren nicht dargestellten feststehenden, insbesondere gehäusefesten, Nebenrotorachse.

Das erste, in diesem Fall untere, Zahnrad Z1 weist ebenfalls einen sich in axialer Richtung parallel zur zweiten Drehachse D2 erstreckenden ersten hülsenförmigen Abschnitt 8 auf, jedoch nicht zur drehbaren Befestigung des Zahnrads Z1 an einer in den Figuren nicht dargestellten feststehenden, insbesondere gehäusefesten, Nebenrotorachse, sondern zur drehbaren Befestigung am ersten hülsenförmigen Abschnitt 6 des zweiten Zahnrads Z2.

Darüber hinaus weisen beide Zahnräder Z1 und Z2 jeweils einen zweiten, sich jeweils in axialer Richtung parallel zur zweiten Drehachse D2 erstreckenden zweiten hülsenförmigen Abschnitt 7 bzw. 9 auf, welcher jeweils in radialer Richtung weiter außen liegt, als der jeweilige erste hülsenförmige Abschnitt 6 bzw. 8.

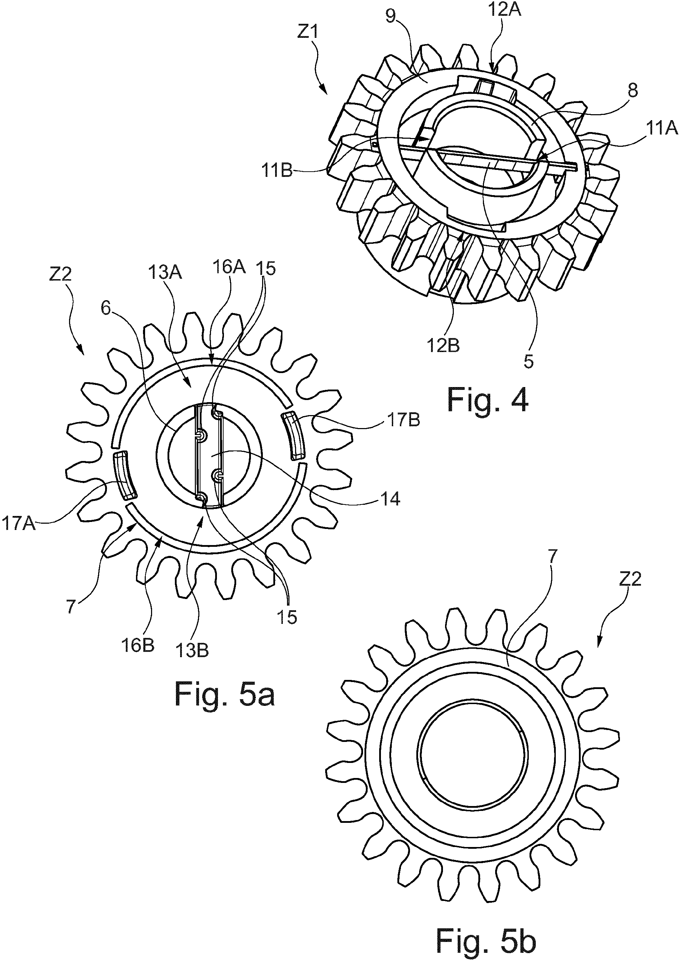

Wie anhand von Fig. 4 erkennbar ist, welche das erste Zahnrad Z1 des ersten Nebenrotors 3 aus Fig. 3 mit der am ersten, unteren Zahnrad Z1 funktionsgemäß befestigten, erfindungsgemäß ausgebildeten Biegefeder 5 in perspektivischer Darstellung zeigt, weist der erste hülsenförmige Abschnitt 8 dabei zwei gegenüberliegende Ausnehmungen 11A und 11B in Umfangsrichtungen auf, insbesondere jeweils als Schlitze 11A und 11B ausgebildete Ausnehmungen 11A und 11B, durch welche sich die Biegefeder 5 hindurcherstreckt, wobei die Biegefeder 5 in einem spannungsfreien Zustand dargestellt ist.

Dieses Ausführungsbeispiel einer erfindungsgemäßen Zahnradanordnung ist dabei derart ausgebildet, dass sich die Biegefeder 5 im spannungsfreien Zustand, wie in Fig. 4 dargestellt, vollständig, d.h. über ihre gesamte Länge entlang eines Durchmessers des Nebenrotors 3 bzw. entlang eines Durchmessers des ersten Zahnrads Z1 erstreckt.

Die Biegefeder 5 ist dabei ferner am ersten Zahnrad Z1 festgelegt, in diesem Fall im Bereich ihrer Enden, wobei die Biegefeder 5 insbesondere am zweiten hülsenförmigen Abschnitt 9 des ersten Zahnrads Z1 festgeklemmt ist.

Wie anhand von Fig. 4 gut erkennbar ist, ist die Biegefeder 5 im vorliegenden Fall durch ein rechteckiges Federblatt gebildet, d.h. eine Blattfeder 5, wobei die Biegefeder 5 senkrecht, d.h. vertikal angeordnet ist.

Der zweite hülsenförmige Abschnitt 9 des ersten Zahnrades Z1 des Nebenrotors 3 weist ebenfalls zwei in radialer Richtung gegenüberliegende Ausnehmungen 12A und 12B in Umfangsrichtung auf, welche in diesem Fall jedoch nicht als Schlitze ausgebildet sind, sondern als Nuten 12A, 12B mit einem U-förmigen Querschnitt.

Das zweite Zahnrad Z2 weist an seiner Unterseite, wie anhand von Fig. 5a erkennbar ist, welche das zweites Zahnrad Z2 in Ansicht von unten zeigt, ebenfalls zwei in radialer Richtung gegenüberliegende Ausnehmungen 13A und 13B im ersten hülsenförmigen Abschnitt 6 auf.

Im Unterschied zum ersten Zahnrad Z1, an welchem die Biegefeder 5 im Bereich ihrer Enden im Bereich des zweiten hülsenförmigen Abschnitts 9 festgeklemmt ist, weist das zweiten Zahnrad Z2 zur Kopplung mit der Biegefeder 5 bzw. mit dem ersten Zahnrad Z1 mittels der Biegefeder 5, eine Nut 14 auf, welche sich innerhalb des ersten hülsenförmigen Abschnitts 6 des zweiten Zahnrads Z2 entlang eines Durchmesser des zweiten Zahnrads Z2 erstreckt.

Fig. 5b zeigt im Vergleich dazu eine Ansicht des zweiten Zahnrad Z2 von oben.

Zur Festlegung der Biegefeder in der Nut 14 weist die Nut 14 des zweiten Zahnrads Z2 vier seitlich nach innen ragende, wechselseitig angeordnete pilzförmige bzw. kuppenförmige Vorsprünge 15 als Klemmelemente auf.

Wie anhand von Fig. 5a darüber hinaus erkennbar ist, weist der zweite hülsenförmige Abschnitt 7 des zweiten Zahnrads Z2 ebenfalls zwei in radialer Richtung gegenüberliegende Ausnehmungen 16A und 16B in Umfangsrichtung auf, welche sich jedoch über einen deutlich größeren Umfangswinkel erstrecken, als die Ausnehmungen 12A und 12B des ersten Zahnrads in dessen zweiten, hülsenförmigen Abschnitt 9, wobei der hülsenförmige Abschnitt 7 des zweiten Zahnrads Z2 komplementär bzw. korrespondierend zum zweiten hülsenförmigen Abschnitt 9 des ersten Zahnrads Z1 ausgebildet ist und insbesondere zwei zwischen den Ausnehmungen 16A und 16B angeordnete, als Vorsprünge wirkende Abschnitte 17A und 17B aufweist.

Die beiden zweiten, hülsenförmigen Abschnitte 9 und 7 der beiden Zahnräder Z1 und Z2 sind dabei derart ausgebildet, dass sie in einem funktionsgemäßen Zusammenbauzustand der Zahnradanordnung miteinander im Eingriff sind nach Art einer Klauenkupplung in einem gekuppelten, drehmomentübertragenden Zustand.

Die vorliegende Zahnradanordnung ist dabei derart ausgebildet, insbesondere die Biegefeder 5 ist derart ausgebildet und angeordnet, dass in einem funktionsgemäßen Zusammenbauzustand durch eine Verdrehung der beiden Zahnräder Z1 und Z2 des Nebenrotors 3 relativ zueinander eine Biegung der Biegefeder 5 mit einem in einer Normalenebene zur zweiten Drehachse D2 liegenden Biegeradius bewirkt werden kann.

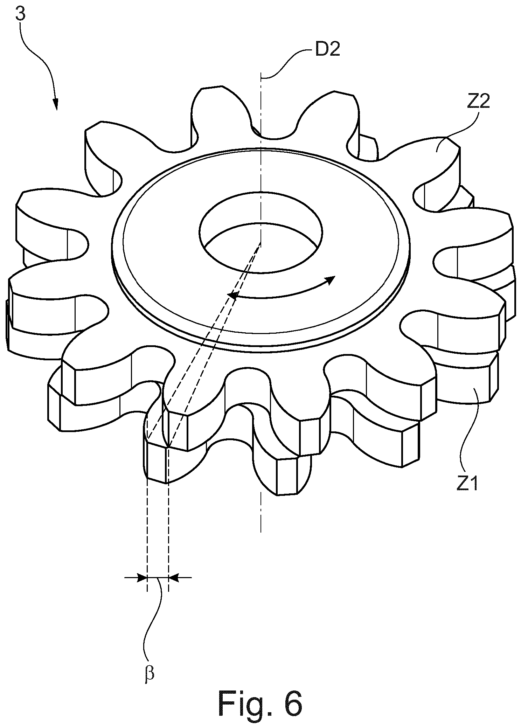

In einer besonders vorteilhaften Ausgestaltung einer erfindungsgemäßen Zahnradanordnung, wie bei diesem Ausführungsbeispiel, die Zahnradanordnung derart ausgebildet, dass in einem spannungsfreien Zustand der Biegefeder 5 die zwei Zahnräder Z1 und Z2 des Nebenrotors 3 um einen definierten Verdrehwinkel β relativ zueinander verdreht sind gemäß Fig. 6, welche den ersten Nebenrotor 3 in einem spannungsfreien Zustand der Biegefeder 5 in perspektivischer Darstellung zeigt, wobei das erste Zahnrad Z1 und das zweite Zahnrad Z2 dabei entgegen einer Federkraft der Biegefeder 5 bis zu einem Verdrehwinkel von null Grad relativ zueinander verdreht werden können, insbesondere bis die Zähne des ersten Zahnrads Z1 deckungsgleich, d.h. kongruent, mit den Zähnen des zweiten Zahnrads Z2 vollständig übereinanderliegen.

Der definierte Verdrehwinkel β, der sich im spannungsfreien Zustand der Biegefeder 5 einstellt, beträgt bei diesem Ausführungsbeispiel 3.5°, je nach Anwendungsfall können auch 2° ausreichend sein oder aber 5° erforderlich sein. D.h. die Ausnehmungen 12A, 12B bzw. 16A, 16B sowie die Nut 14 sind derart bemessen und angeordnet, insbesondere relativ zueinander, dass sich im spannungsfreien Zustand der Biegefeder 5 ein definierter Verdrehwinkel β von 3.5° einstellt.

Dadurch überragen sich jeweils die Zahnflanken der Zähne des ersten Zahnrads Z1 und des zweiten Zahnrads Z2 in Umfangsrichtung geringfügig bzw. treten hinter dieser zurück. Infolgedessen erscheint der durch die beiden Zahnräder Z1 und Z2 gebildete Zahn breiter als der Zahn eines einzigen Zahnrads Z1 bzw. Z2. Dadurch kann die zugehörige Zahnlücke des mit den jeweiligen Zahnrädern Z1 und Z2 kämmenden Hauptrotors 2 besser, insbesondere vollständig, d.h. spielfrei, ausgefüllt werden.

Insbesondere kann auf diese Art und Weise erreicht werden, dass der Zahn des einen Zahnrads Z1 an einer Zahnflanke eines Zahnes des Hauptrotors 2 anliegt und der Zahn des anderen Zahnrads Z2 an der benachbarten Zahnflanke eines benachbarten Zahnes des Hauptrotors 2. Dadurch kann das Spiel zwischen Hauptrotor 2 und erstem Nebenrotor 3 in der Verzahnung über einen breiten Betriebsbereich vollständig ausgeglichen werden

Infolge einer auf diese Weise ermöglichten spielfreien Übertragung des Drehwinkels δ des Hauptrotors 2 auf den ersten Nebenrotor 3 kann die Genauigkeit, mit welcher ein Drehwinkel δ einer Welle 10, mit welchen der Hauptrotor 2 drehfest verbunden werden kann, einer eine erfindungsgemäße Zahnradanordnung aufweisenden Sensorvorrichtung 1 verbessert werden gegenüber einer spielbehafteten Sensorvorrichtung.

Verändert sich die Geometrie der Verzahnung durch Temperaturschwankungen, insbesondere durch eine Temperaturerhöhung, werden die beiden Zahnräder Z1 und Z2 infolge der dabei auftretenden Kräfte derart relativ zueinander verdreht, dass sich die jeweiligen Zähne zunehmend überlappen, insbesondere bis maximal zu einem Verdrehwinkel von 0°, d.h. bis sie vollständig übereinanderliegen, wodurch eine Verspannung der Verzahnung, welche in der Regel mit einem erhöhten Verschleiß verbunden ist, vermieden werden kann.

Durch die erfindungsgemäße Verwendung einer im spannungsfreien Zustand geraden Biegefeder 5 kann ein konstruktiv besonders einfacher Aufbau einer Zahnradanordnung erreicht werden und somit ein konstruktiv besonders einfacher Aufbau einer entsprechenden Sensorvorrichtung 1, insbesondere eine Lenkwinkelsensorvorrichtung 1 zur Erfassung eines Drehwinkels δ einer Lenkwelle10 eines Kraftfahrzeugs.

Der zweite, in den Fig. 2 bis 6 nicht dargestellte Nebenrotor 4 der anhand des in den Fig. 1 bis 6 gezeigten und beschriebenen Ausführungsbeispiels einer erfindungsgemäßen Lenkwinkelsensorvorrichtung 1 ist analog zum Nebenrotor 3 ausgebildet. Er unterscheidet sich lediglich hinsichtlich den geometrischen Abmessungen, insbesondere hinsichtlich der Zähnezahl sowie der zugehörigen, die Verzahnung konkretisierenden Durchmesser (Teilkreis-, Kopfkreis- und Fußkreisdurchmesser) sowie hinsichtlich des sich bei spannungsfreier Biegefeder einstellenden, definierten Verdrehwinkel-Wertes, welcher in diesem Fall 3° beträgt, von dem ersten Nebenrotor 3.

Dadurch, dass der zweite Nebenrotor 4 ebenfalls, insbesondere zusätzlich, eine spielfreie Übertragung des Drehwinkels d des Hauptrotors 2 auf den zweiten Nebenrotor 4 ermöglicht, kann die Genauigkeit der Lenkwinkelsensorvorrichtung 1 noch weiter verbessert werden.

Selbstverständlich ist Vielzahl konstruktiver Abwandlungen zu dem erläuterten Ausführungsbeispiel möglich, ohne den Inhalt der Patentansprüche zu verlassen.

### Bezugszeichenliste:

- 1: erfindungsgemäße Lenkwinkelsensorvorrichtung
- 2: Hauptrotor
- 3: erster Nebenrotor
- 4: zweiter Nebenrotor
- 5: Biegefeder
- 6: erster hülsenförmiger Abschnitt des zweiten Zahnrads
- 7: zweiter hülsenförmiger Abschnitt des zweiten Zahnrads
- 8: erster hülsenförmiger Abschnitt des ersten Zahnrads
- 9: zweiter hülsenförmiger Abschnitt des ersten Zahnrads
- 10: Lenkwelle
- 11A, 11B: Ausnehmung im ersten hülsenförmigen Abschnitt des ersten Zahnrads
- 12A, 12B: Ausnehmung im zweiten hülsenförmigen Abschnitt des ersten Zahnrads
- 13A, 13B: Ausnehmung im ersten hülsenförmigen Abschnitt des zweiten Zahnrads
- 14: Nut
- 15: Klemmelement
- 16A, 16B: Ausnehmung im zweiten hülsenförmigen Abschnitt des zweiten Zahnrads
- 17A, 17B: Vorsprung im zweiten hülsenförmigen Abschnitt des zweiten Zahnrads

- D1: erste Drehachse
- D2: zweite Drehachse
- M: Permanentmagnet
- SE1: erste Sensoreinrichtung
- SE2: zweite Sensoreinrichtung
- Z1: erstes Zahnrad
- Z2: zweites Zahnrad

- α: Biegewinkel
- β: Verdrehwinkel
- δ: Drehwinkel der Welle

## Patentansprüche

1. Zahnradanordnung zur Erfassung oder Übertragung eines Drehwinkels (δ) einer drehbaren Welle für eine Lenkwinkelsensorvorrichtung zur Erfassung eines Drehwinkels (δ) einer Lenkwelle (10) eines Kraftfahrzeugs, aufweisend:
wenigstens einen drehsynchron mit der Welle (10) verbindbaren und um eine erste Drehachse (D1) drehbaren Hauptrotor (2) mit einer Verzahnung,
wenigstens einen mechanisch mit einer konstanten und gleichförmigen ersten Übersetzung mit dem Hauptrotor (2) gekoppelten und um eine zur ersten Drehachse (D1) parallele, zweite Drehachse (D2) drehbaren Nebenrotor (3, 4) mit einer Verzahnung, und
ein Federelement (5),
wobei die Verzahnung des Hauptrotors (2) mit der Verzahnung des Nebenrotors (3, 4) kämmt,
wobei der Nebenrotor (3, 4) wenigstens zwei konzentrisch zur zweiten Drehachse (D2) und in axialer Richtung der zweiten Drehachse (D2) parallel zueinander angeordnete Zahnräder (Z1, Z2) aufweist, welche jeweils drehbar um die zweite Drehachse (D2) sind und jeweils mit der Verzahnung des Hauptrotors (2) kämmen,
wobei die wenigstens zwei Zahnräder (Z1, Z2) des Nebenrotors (3, 4) um die zweite Drehachse (D2) relativ zueinander verdrehbar sind, und
wobei die wenigstens zwei Zahnräder (Z1, Z2) des Nebenrotors (3, 4) mittels des einen Federelements (5) miteinander gekoppelt sind,
wobei das eine Federelement (5) eine gerade Biegefeder (5) ist, die in einem spannungsfreien Zustand einen Biegewinkel (α)von null Grad aufweist,
wobei sich die Biegefeder (5) in wenigstens einem Betriebszustand der Zahnradanordnung entlang eines Durchmessers des Nebenrotors (3) erstreckt,
wobei die Biegefeder (5) dabei die zweite Drehachse schneidet,
**dadurch gekennzeichnet, dass**
wenigstens eines der beiden Zahnräder (Z2) des Nebenrotors (3, 4) einen sich in axialer Richtung parallel zur zweiten Drehachse (D2) erstreckenden ersten hülsenförmigen Abschnitt (6) aufweist zur drehfesten Befestigung des Zahnrads (Z2) an einer um die zweite Drehachse (D2) drehbaren Nebenrotorwelle oder zur drehbaren Befestigung des Zahnrads (Z2) an einer feststehenden Nebenrotorachse, wobei
eines der beiden Zahnräder (Z1, Z2) des Nebenrotors (3, 4), einen sich in axialer Richtung parallel zur zweiten Drehachse (D2) erstreckenden zweiten hülsenförmigen Abschnitt (7, 9) aufweist, wobei der zweite hülsenförmige Abschnitt (7, 9) wenigstens eines Zahnrades (Z1, Z2) des Nebenrotors (3, 4), wenigstens zwei in radialer Richtung gegenüberliegende Ausnehmungen (12A, 12B; 16A, 16B) aufweist, und wobei
die zweiten hülsenförmigen Abschnitte (7, 9) der wenigstens zwei Zahnräder (Z1, Z2) derart ausgebildet sind, dass ihre zweiten hülsenförmigen Abschnitte (7, 9) miteinander im Eingriff sind nach Art einer Klauenkupplung in einem gekuppelten, drehmomentübertragenden Zustand, wobei die Ausnehmungen (12A, 12B; 16A, 16B) in Umfangsrichtung derart bemessen und angeordnet sind, dass in einem spannungsfreien Zustand der Biegefeder (5) die wenigstens zwei Zahnräder (Z1, Z2) des Nebenrotors (3, 4) um den definierten Verdrehwinkel (β) relativ zueinander verdreht sind und entgegen einer Federkraft der Biegefeder (5) bis zu einem Verdrehwinkel (β) von null Grad relativ zueinander verdreht werden.

2. Zahnradanordnung nach einem der vorgenannten Ansprüche, **dadurch gekennzeichnet, dass** die Biegefeder (5) derart ausgebildet und angeordnet ist, dass durch eine Verdrehung der beiden Zahnräder (Z1, Z2) des Nebenrotors (3, 4) relativ zueinander eine Biegung der Biegefeder (5) mit einem in einer Normalenebene zur zweiten Drehachse (D2) liegenden Biegeradius bewirkt wird.

3. Zahnradanordnung nach einem der vorgenannten Ansprüche, **dadurch gekennzeichnet, dass** der erste hülsenförmige Abschnitt (6, 8) wenigstens eines Zahnrades (Z1, Z2) des Nebenrotors (3, 4), wenigstens zwei in radialer Richtung gegenüberliegende Ausnehmungen (11A, 11B; 13A, 13B), durch welche sich die Biegefeder (5) hindurcherstreckt.

4. Zahnradanordnung nach einem der vorgenannten Ansprüche, **dadurch gekennzeichnet, dass** die Biegefeder (5) an wenigstens einem der wenigstens zwei Zahnräder (Z1) im Bereich ihrer Enden oder an ihren Enden festgelegt ist.

5. Zahnradanordnung nach einem der vorgenannten Ansprüche, insbesondere nach Anspruch 8, **dadurch gekennzeichnet, dass** die Biegefeder (5) am anderen der wenigstens zwei Zahnräder (Z2) des Nebenrotors (3,4), in einem Schlitz oder einer Nut (14) geführt oder festgelegt ist, wobei sich der Schlitz oder die Nut (14) zumindest teilweise entlang eines Durchmesser des zugehörigen Zahnrads (Z2) erstreckt.

6. Lenkwinkelsensorvorrichtung (1) zur Erfassung eines Drehwinkels (δ) einer Lenkwelle (10) eines Kraftfahrzeugs, aufweisend:
eine Zahnradanordnung mit wenigstens einem drehsynchron mit der Welle (10) verbindbaren und um eine erste Drehachse (D1) drehbaren Hauptrotor (2) mit einer Verzahnung sowie mit wenigstens einen mechanisch mit einer konstanten und gleichförmigen ersten Übersetzung mit dem Hauptrotor (2) gekoppelten und um eine zur ersten Drehachse (D1) parallele, zweite Drehachse (D2) drehbaren Nebenrotor (3, 4) mit einer Verzahnung, wobei die Verzahnung des Hauptrotors (2) mit der Verzahnung des Nebenrotors (3, 4) kämmt, und
eine Sensoreinrichtung (SE!, SE2) zur Erfassung des Drehwinkels (δ) des wenigstens einen Nebenrotors (3, 4),
**dadurch gekennzeichnet, dass**
die Zahnradanordnung nach einem der Ansprüche 1 bis 5 ausgebildet ist.

7. Sensorvorrichtung (1) nach Anspruch 6 **dadurch gekennzeichnet, dass**
die Sensoreinrichtung (SE1, SE2) wenigstens eine Magnetfelderzeugungseinrichtung (M), und wenigstens einen Magnetsensor aufweist, wobei mittels der Magnetfelderzeugungseinrichtung (M) eine Drehbewegung des Nebenrotors (3, 4) zu dem Magnetsensor übertragbar ist und mittels des Magnetsensors ein Drehwinkel des zugehörigen Nebenrotors (3, 4) erfasst wird.

## Claims

1. Gearwheel arrangement for the detection or transmission of a rotary angle (δ) of a rotatable shaft for a steering angle sensor apparatus for the detection of a rotary angle (δ) of a steering shaft (10) of a motor vehicle, having:
at least one main rotor (2) which can be connected to the shaft (10) in a rotationally synchronous manner, can be rotated about a first rotational axis (D1), and has a toothing system,
at least one auxiliary rotor (3, 4) which is coupled mechanically to the main rotor (2) with a constant and
homogeneous first transmission ratio, can be rotated about a second rotational axis (D2) which is parallel to the first rotational axis (D1), and has a toothing system, and
a spring element (5),
the toothing system of the main rotor (2) meshing with the toothing system of the auxiliary rotor (3, 4),
the auxiliary rotor (3, 4) having at least two gearwheels (Z1, Z2) which are arranged concentrically with respect to the second rotational axis (D2) and parallel to one another in the axial direction of the second rotational axis (D2), can be rotated in each case about the second rotational axis (D2), and mesh in each case with the toothing system of the main rotor (2),
it being possible for the at least two gearwheels (Z1, Z2) of the auxiliary rotor (3, 4) to be rotated relative to one another about the second rotational axis (D2), and the at least two gearwheels (Z1, Z2) of the auxiliary rotor (3, 4) being coupled to one another by means of the one spring element (5),
the one spring element (5) being a straight bending spring (5) which has a bending angle (α) of zero degrees in a stress-free state,
the bending spring (5) extending along a diameter of the auxiliary rotor (3) in at least one operating state of the gearwheel arrangement,
the bending spring (5) intersecting the second rotational axis here,
**characterized in that**
at least one of the two gearwheels (Z2) of the auxiliary rotor (3, 4) has a first sleeve-shaped section (6) which extends in the axial direction parallel to the second rotational axis (D2) for the fixed fastening for conjoint rotation of the gearwheel (Z2) to an auxiliary rotor shaft which can be rotated about the second rotational axis (D2) or for the rotatable fastening of the gearwheel (Z2) to a stationary auxiliary rotor axle,
one of the two gearwheels (Z1, Z2) of the auxiliary rotor (3, 4) having a second sleeve-shaped section (7, 9) which extends in the axial direction parallel to the second rotational axis (D2), the second sleeve-shaped section (7, 9) of at least one gearwheel (Z1, Z2) of the auxiliary rotor (3, 4) having at least two recesses (12A, 12B; 16A,
16B) which lie opposite one another in the radial direction, and
the second sleeve-shaped sections (7, 9) of the at least two gearwheels (Z1, Z2) being configured in such a way that their second sleeve-shaped sections (7, 9) are in engagement with one another in the manner of a claw coupling in a coupled, torque-transmitting state, the recesses (12A, 12B; 16A, 16B) being arranged and
dimensioned in the circumferential direction in such a way that, in a stress-free state of the bending spring (5), the at least two gearwheels (Z1, Z2) of the auxiliary rotor (3, 4) are rotated relative to one another by the defined rotational angle (β) and are rotated counter to a spring force of the bending spring (5) up to a rotational angle (β) of zero degrees relative to one another.

2. Gearwheel arrangement according to one of the preceding claims, **characterized in that** the bending spring (5) is configured and arranged in such a way that bending of the bending spring (5) with a bending radius which lies in a perpendicular plane with respect to the second rotational axis (D2) is brought about by way of a rotation of the two gearwheels (Z1, Z2) of the auxiliary rotor (3, 4) relative to one another.

3. Gearwheel arrangement according to either of the preceding claims, **characterized in that** the first sleeve-shaped section (6, 8) of at least one gearwheel (Z1, Z2) of the auxiliary rotor (3, 4) at least two recesses (11A, 11B; 13A, 13B) which lie opposite one another in the radial direction and through which the bending spring (5) extends.

4. Gearwheel arrangement according to one of the preceding claims, **characterized in that** the bending spring (5) is fixed in the region of its ends or at its ends on at least one of the at least two gearwheels (Z1).

5. Gearwheel arrangement according to one of the preceding claims, in particular according to Claim 8, **characterized in that** the bending spring (5) is fixed or is guided in a slot or a groove (14) on the other one of the at least two gearwheels (Z2) of the auxiliary rotor (3, 4), the slot or the groove (14) extending at least partially along a diameter of the associated gearwheel (Z2) .

6. Steering wheel sensor apparatus (1) for the detection of a rotary angle (δ) of a steering shaft (10) of a motor vehicle, having:
a gearwheel arrangement with at least one main rotor (2) which can be connected to the shaft (10) in a rotationally synchronous manner, can be rotated about a first rotational axis (D1), and has a toothing system, and with at least one auxiliary rotor (3, 4) which is coupled mechanically to the main rotor (2) with a constant and
homogeneous first transmission ratio, can be rotated about a second rotational axis (D2) which is parallel to the first rotational axis (D1), and has a toothing system, the toothing system of the main rotor (2) meshing with the toothing system of the auxiliary rotor (3, 4), and
a sensor device (SE1, SE2) for the detection of the rotary angle (δ) of the at least one auxiliary rotor (3, 4),
**characterized in that**
the gearwheel arrangement is configured according to one of Claims 1 to 5.

7. Sensor apparatus (1) according to Claim 6,
**characterized in that**
the sensor device (SE1, SE2) has at least one magnetic field generation device (M) and at least one magnetic sensor, it being possible for a rotational movement of the auxiliary rotor (3, 4) to be transmitted to the magnetic sensor by means of the magnetic field generation device (M), and a rotary angle of the associated auxiliary rotor (3, 4) being detected by means of the magnetic sensor.

## Revendications

1. Ensemble de roues dentées destiné à détecter ou transmettre un angle de rotation (δ) d'un arbre rotatif destiné à un dispositif de détection d'angle de braquage destiné à détecter un angle de rotation (δ) d'un arbre de direction (10) d'un véhicule automobile, ledit ensemble comportant :
au moins un rotor principal rotatif (2) pourvu d'une denture, pouvant être relié de manière synchrone en rotation à l'arbre (10) et pouvant tourner sur un premier axe de rotation (D1),
au moins un rotor secondaire (3, 4) pourvu d'une denture, accouplé mécaniquement au rotor principal (2) avec un premier rapport de transmission constant et uniforme et pouvant tourner sur un deuxième axe de rotation (D2) parallèle au premier axe de rotation (D1), et
un élément à ressort (5),
la denture du rotor principal (2) s'engrenant avec la denture du rotor secondaire (3, 4),
le rotor secondaire (3, 4) comportant au moins deux roues dentées (Z1, Z2) qui sont concentriques au deuxième axe de rotation (D2) et parallèles l'une à l'autre dans la direction axiale du deuxième axe de rotation (D2) et qui peuvent chacune tourner sur le deuxième axe de rotation (D2) et s'engrener avec la denture du rotor principal (2),
les au moins deux roues dentées (Z1, Z2) du rotor secondaire (3, 4) pouvant tourner l'une par rapport à l'autre sur le deuxième axe de rotation (D2), et
les au moins deux roues dentées (Z1, Z2) du rotor secondaire (3, 4) étant accouplées l'une à l'autre au moyen d'un élément à ressort (5),
l'élément à ressort (5) étant un ressort spiral droit (5) qui, dans un état sans contrainte, a un angle de flexion (α) de zéro degré,
le ressort spiral (5) s'étendant dans au moins un état de fonctionnement de l'ensemble de roues dentées le long d'un diamètre du rotor secondaire (3),
le ressort spiral (5) coupant le deuxième axe de rotation,
**caractérisé en ce que**
l'une au moins des deux roues dentées (Z2) du rotor secondaire (3, 4) comporte une première portion (6) en forme de manchon qui s'étend dans la direction axiale parallèlement au deuxième axe de rotation (D2) pour fixer solidairement en rotation la roue dentée (Z2) à un arbre de rotor secondaire pouvant tourner sur le deuxième axe de rotation (D2) ou pour fixer la roue dentée (Z2) de manière rotative à un axe de rotor secondaire fixe,
l'une des deux roues dentées (Z1, Z2) du rotor secondaire (3, 4) comportant une deuxième portion (7, 9) en forme de manchon qui s'étend dans la direction axiale parallèlement au deuxième axe de rotation (D2), et la deuxième portion (7, 9) en forme de manchon d'au moins une roue dentée (Z1, Z2) du rotor secondaire (3, 4) comportant au moins deux évidements (12A, 12B ; 16A, 16B) opposés dans la direction radiale, et
les deuxièmes portions (7, 9) en forme de manchon des au moins deux roues dentées (Z1, Z2) étant conçues de telle sorte que leurs deuxièmes portions (7, 9) en forme de manchon soient en engagement l'une avec l'autre à la manière d'un accouplement à griffes dans un état accouplé de transmission de couple, les évidements (12A, 12B ; 16A, 16B) étant dimensionnés et disposés dans la direction circonférentielle de telle sorte que, dans un état sans tension du ressort spiral (5), les au moins deux roues dentées (Z1, Z2) du rotor secondaire (3, 4) soient tournées l'une par rapport à l'autre de l'angle de rotation défini (β) et soient tournées l'une par rapport à l'autre jusqu'à un angle de rotation (β) de zéro degré en s'opposant à une force de rappel du ressort spiral (5).

2. Ensemble de roues dentées selon l'une des revendications précédentes, **caractérisé en ce que** le ressort spiral (5) est conçu et disposé de telle sorte qu'une rotation des deux roues dentées (Z1, Z2) du rotor secondaire (3, 4) l'une par rapport à l'autre entraîne une flexion du ressort spiral (5) avec un rayon de flexion situé dans un plan normal au deuxième axe de rotation (D2).

3. Ensemble de roues dentées selon l'une des revendications précédentes, **caractérisé en ce que** la première portion (6, 8) en forme de manchon d'au moins une roue dentée (Z1, Z2) du rotor secondaire (3, 4) au moins deux évidements (11A, 11B ; 13A, 13B) à travers lesquels s'étend le ressort spiral (5).

4. Ensemble de roues dentées selon l'une des revendications précédentes, **caractérisé en ce que** le ressort spiral (5) est fixé à l'un au moins des au moins deux roues dentées (Z1) au niveau de leurs extrémités ou à leurs extrémités.

5. Ensemble de roues dentées selon l'une des revendications précédentes, notamment selon la revendication 8, **caractérisé en ce que** le ressort spiral (5) est guidé ou est fixé dans une fente ou une gorge (14) ménagée au niveau de l'autre des au moins deux roues dentées (Z2) du rotor secondaire (3, 4), la fente ou la gorge (14) s'étendant au moins partiellement le long d'un diamètre de la roue dentée associée (Z2).

6. Dispositif de détection d'angle de braquage (1) destiné à détecter un angle de rotation (δ) d'un arbre de direction (10) d'un véhicule automobile, ledit dispositif comportant :
un ensemble de roues dentées comprenant au moins un rotor principal (2) pourvu d'une denture, pouvant être relié à l'arbre (10) d'une manière synchrone en rotation et pouvant tourner sur un premier axe de rotation (D1) et au moins un rotor secondaire (3, 4) pourvu d'une denture, accouplé mécaniquement au rotor principal (2) avec un premier rapport de transmission constant et uniforme et pouvant tourner sur un deuxième axe de rotation (D2) parallèle au premier axe de rotation (D1) et, la denture du rotor principal (2) s'engrenant avec la denture du rotor secondaire (3, 4), et
un moyen de détection (SE1, SE2) destiné à détecter l'angle de rotation (δ) de l'au moins un rotor secondaire (3, 4),
**caractérisé en ce que**
l'ensemble de roues dentées est conçu selon l'une des revendications 1 à 5.

7. Dispositif de détection (1) selon la revendication 6, **caractérisé en ce que**
le moyen de détection (SE1, SE2) comporte au moins un moyen de génération de champ magnétique (M) et au moins un capteur magnétique, un mouvement de rotation du rotor secondaire (3, 4) pouvant être transmis au capteur magnétique à l'aide du moyen de génération de champ magnétique (M) et un angle de rotation du rotor secondaire associé (3, 4) étant détecté au moyen du capteur magnétique.
